# EUROPEAN PATENT APPLICATION

(11) **EP 1 786 234 A2**
(43) Date of publication of application: **16.05.2007**
(21) Application number: 06250993.0
(22) Date of filing: 24.02.2006
(51) Int. Cl.: H04Q 7/38

(54) **Wireless network control method and device as well as mobile communication system**

(30) Priority: 11.11.2005 JP 2005326988
(71) Applicant: Fujitsu Ltd., Kawasaki-shi, Kanagawa 211-8588 (JP)
(72) Inventor: Beppu, Yoshihiro, Fujitsu Kyushu Network Tech. Ltd, Fukuoka-shi, Fukuoka-ken (JP); Matsukuma, Toru, Fujitsu Kyushu Network Tech. Ltd, Fukuoka-shi, Fukuoka-ken (JP); Hirata, Shigehiko, Fujitsu Kyushu Net. Tech. Ltd, Fukuoka-shi, Fukuoka-ken (JP); Saito, Masayuki, Fujitsu Kyushu Network Tech. Ltd, Fukuoka-shi, Fukuoka-ken (JP); Morikawa, T., Fujitsu Kyushu Network Tech. Ltd, Fukuoka-shi, Fukuoka-ken (JP)
(74) Representative: Hitching, Peter Matthew

(57) **Abstract**

A connection switchover between wireless network control devices (301,302,303,304) can be performed with a connected base station (201) being maintained in order to avoid a congestion when the congestion occurs in one of the wireless network control devices within a mobile communication network, network management information indicating congestion states of all wireless network control devices is acquired from a core network within the mobile communication network, a wireless network control device list is prepared in which a higher priority is assigned to the wireless network control devices in ascending order of congestion degree based on the network management information when a call request is received from one mobile terminal (100) through a base station, the wireless network control device list is notified to the mobile terminal through the base station, and the mobile terminal is enabled to select one of the wireless network control devices as a connecting destination.

## Description

### Background of the Invention

### Field of the Invention

The present invention relates to a wireless network control method and device, and a mobile communication system, and in particular to a wireless network control method and device, and a mobile communication system switching over a connection of a wireless network control device in order to avoid a congestion which occurs in the wireless network control device.

### Description of the Related Art

As the above-mentioned congestion avoidance technology, prior art examples [1]-[3] described herebelow can be mentioned.

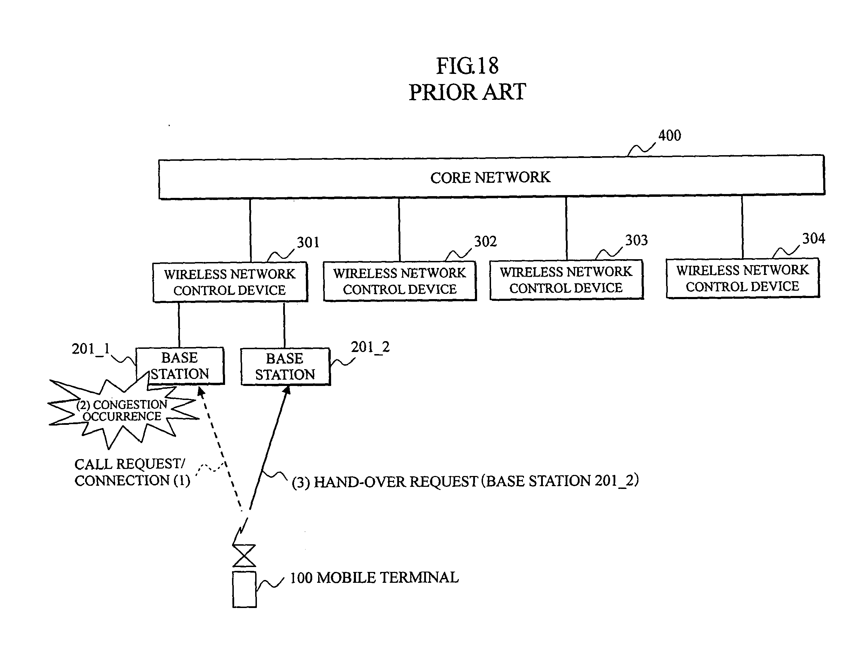

### Prior art example [1]: Fig.18

Fig.18 shows an example of a mobile communication system composed of a core network 400, four wireless network control devices 301-304 (hereinafter, occasionally represented by a reference numeral 300) connected to the core network 400, and two base stations 201_1 and 201_2 (hereinafter, occasionally represented by a reference numeral 200) managed by the wireless network control device 301 among the devices 301-304. This example specifically shows a case where a mobile terminal 100 is connected to the base station 201_1 to perform communications, in which the mobile terminal 100 is in its active state after having made a call request (1) indicated by a dotted line to the base station 201_1.

When a congestion (2) occurs in the base station 201_1, the mobile terminal 100 autonomously detects that the base station 201_1 presently connected is in a congestion state. The mobile terminal 100 performs a hand-over request (3) indicated by a solid line to the other base station 201_2 free of congestion to switch over the connection, thereby enabling the communication to be continued (see e.g. patent document 1).

### Prior art example [2]

Also, while not shown in figures, there is another prior art example in which a base station where a congestion has occurred transmits a busy notification to a mobile terminal connected, and the mobile terminal can avoid the congestion by selecting/connecting to another base station based on information included in the busy notification and information about an adjoining base station preliminarily held (see e.g. patent document 2).

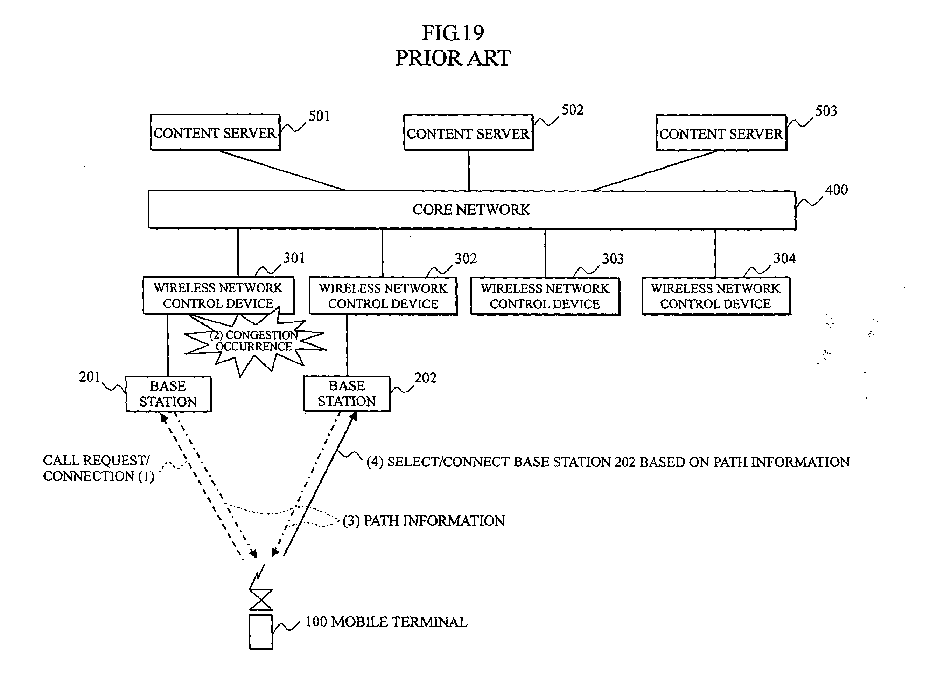

### Prior art example [3]: Fig.19

Fig. 19 shows a mobile communication system in which content servers 501-503 (hereinafter, occasionally represented by a reference numeral 500) providing a specific service are further connected to the core network 400 in the prior art example shown in Fig.18. This example specifically shows a case where the mobile terminal 100 is connected to a base station 201 to perform communications and utilizes the service provided by the content servers 500.

In the same way as the prior art example of Fig.18, when the mobile terminal 100 is in the active state after having made the call request (1) to the base station 201, and the congestion (2) occurs in the wireless network control device 301 which is an upper-level device of the base station 201, the mobile terminal 100 acquires path information (3) (information about all of the wireless paths between the mobile terminal 100 and the base stations 200, and all of the wired paths from the base stations 200 to the content servers 500) indicated by dashed lines.

The mobile terminal 100 selects/connects (4) to a base station 202 based on the path information (3) acquired, thereby enabling the service provided by the content servers 500 to be continuously used by avoiding the congestion (2) (see e.g. patent document 3).
[Patent document 1] Japanese Patent Application Laid-open No. 5-292012
[Patent document 2] Japanese Patent Application Laid-open No. 2003-224882
[Patent document 3] Japanese Patent Application Laid-open No. 2004-266519

Together with the recent rapid spread of mobile telephones and an increase in usage of high frequency bandwidth data communication, the number of base stations located has been increased and an area covered by a single base station has been reduced.

Therefore, the number of base stations managed by the wireless network control device that is the upper-level device of the base stations increases, so that a congestion occurrence due to a processing load of the wireless network control device and a deterioration of a communication quality have become issues.

The above-mentioned patent documents 1 and 2 can deal with such a congestion by switching over a connecting destination between the base stations. However, there have been problems that when a congestion has occurred in the wireless network control device, such a congestion can not be avoided, and in addition when the base station which is a connecting switchover destination is managed by the same wireless network control device, the congestion having occurred in the wireless network control device can not be avoided even if the base station is switched over.

Also, in the above-mentioned patent document 3, a congestion is avoided by switching over the wireless paths and the wired paths respectively, i.e. the base stations and all of the paths from the base stations leading to the content servers. Therefore, there have been problems that paths can not be switched over when the base station is alone, and the paths can not be switched over also in a situation where the base station of the switchover destination is congested.

### Summary of the Invention

It is accordingly an object of the present invention to provide a method and device, and a mobile communication system by which a connection switchover between wireless network control devices can be performed with a base station connected being maintained in order to avoid a congestion when the congestion has occurred in the wireless network control device within a mobile communication network.

[1] In order to achieve the above-mentioned object, a wireless network control method (or device) according to the present invention comprises: a first step of (or means) acquiring, from a core network within a mobile communication network, network management information indicating congestion states of all wireless network control devices; a second step of (or means) preparing a wireless network control device list in which a higher priority is assigned to the wireless network control devices in ascending order of congestion degree (as the congestion state becomes better) based on the network management information when a call request is received from one mobile terminal through a base station; and a third step of (or means) notifying the wireless network control device list to the mobile terminal through the base station to enable the mobile terminal to select one of the wireless network control devices as a connecting destination.

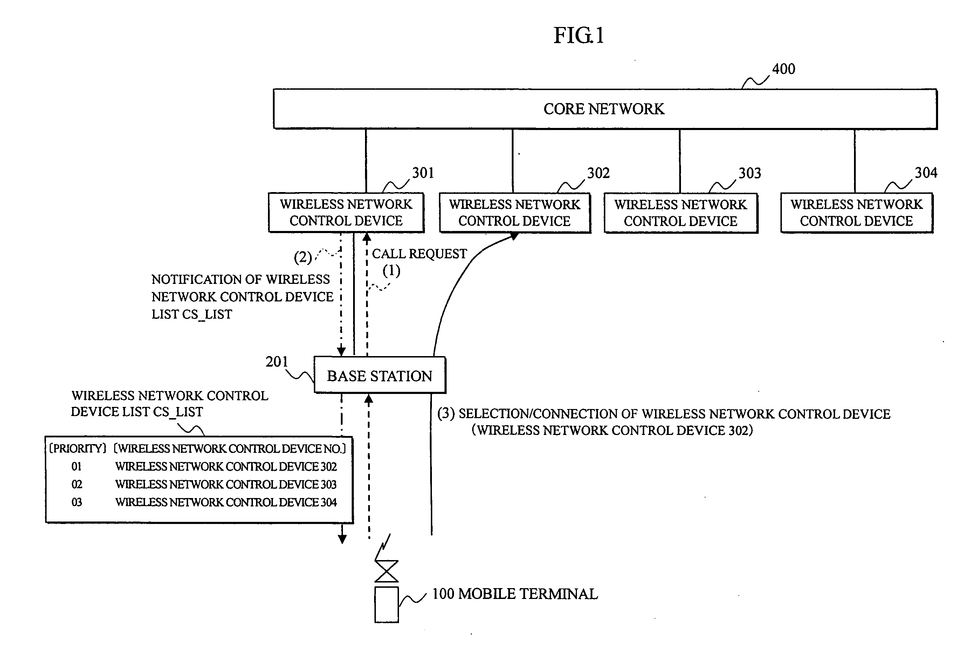

This will be described by referring to an operation principle of the present invention shown in Fig.1. The wireless network control method (and device) according to the present invention is realized in each of wireless network devices 301-304 within a mobile communication network. For example, the wireless network device 301, the same applying to the wireless network devices 302-304, acquires network management information indicating congestion states of the wireless network control devices 301-304 from a core network 400 at the first step (or means).

At the second step (or means), when receiving a call request (1) indicated by a dotted line from a mobile terminal 100 through a base station 201, the wireless network control device 301 prepares a wireless network control device list CS_LIST in which a higher priority is assigned to the wireless network control devices in ascending order of congestion degree based on the network management information. At the third step (or means), the wireless network control device 301 notifies (2) the wireless network control device list CS_LIST prepared to the mobile terminal 100 through the base station 201 as indicated by dashed lines.

Supposing that the wireless network control device list CS_LIST is as shown in Fig.1 where the highest priority (priority = "01") is set in e.g. the wireless network control device 302, priority = "02" is set in the wireless network control device 303, and priority = "03" is set in the wireless network control device 304 as the priorities become low, the mobile terminal 100 selects the wireless network control device 302 with the highest priority as the connecting destination from the wireless network control device list CS_LIST to be connected.

Thus, in the wireless network control method (and device) of the present invention, it becomes possible to perform a connection switchover to the wireless network control device in a good congestion state with the base station 201 connected being maintained.

Accordingly, when a congestion has occurred in an arbitrary wireless network control device within the mobile communication network, the connection is switched over from the wireless network control device in a bad congestion state to the wireless network control device in a good congestion state. During the connection switchover, the congestion state of the wireless network control device where the congestion has occurred can be restored.

[2] Also, the above-mentioned [1] may further comprise a fourth step of notifying the congestion state of each of the wireless network control devices itself to the core network.

Accordingly, each of the wireless network control devices 301-304 notifies the congestion state of the control device itself to the core network 400, thereby enabling the core network 400 to hold the latest congestion states.

[3] Also, in the above-mentioned [1], the congestion state may comprise three or more states.

Namely, in the prior art examples shown in Figs. 18 and 19, the congestion avoidance was triggered by a complete occurrence of a congestion state. However, the present invention can include three or more states as the congestion state (step-by-step state such as a state where the congestion has occurred, a state at risk for a congestion occurrence, and a state where communication is normally performed). Therefore, before a specific wireless network control device (e.g. wireless network control device 301) assumes a complete congestion state, accesses to the wireless network control device are dispersed, thereby preventing the congestion from occurring.

[4] Also, in the above-mentioned [1], the network management information may further comprise call time information in which call times of all mobile terminals having made call requests are set; and the second step (or means) may comprise a step of (or means) preparing the wireless network control device list in which a different connection priority is assigned to each mobile terminal having made a call at a same time to render a different wireless network control device a connecting destination, when a plurality of mobile terminals having made calls at the same time are extracted from the call time information.

Namely, in this case, the network management information is composed so as to include call time information in addition to the congestion state. When a call request is received from one mobile terminal 100 and when a call from another mobile terminal (other than mobile terminal 100) is extracted at the same time from the call time information, the wireless network control device list CS_LIST is prepared so that the mobile terminal may render a different wireless network control device a connecting destination in descending order of connection priority for mobile terminal.

Accordingly, the mobile terminals having called at the same time are dispersedly connected to the different wireless network control devices by the wireless network control device list CS_LIST, thereby enabling an access concentration to a specific wireless network device to be prevented.

[5] Also, in the above-mentioned [1], the network management information may further comprise connection priority information in which connection priorities for all mobile terminals within a network are set; and the second step (or means) may comprise a step of (or means) extracting the connection priority of each mobile terminal from the connection priority information, and preparing the wireless network control device list in which a higher priority is assigned to the wireless network control devices in ascending order of congestion degree sequentially from the mobile terminal with a higher connection priority to render a different wireless network control device a connecting destination.

Namely, in this case, the network management information is composed so as to include connection priority information of the mobile terminal in addition to the congestion state. The connection priority for each mobile terminal is set by e.g. a contract type or the like.

When a call request is received from an arbitrary mobile terminal 100, the connection priority of each mobile terminal (all of the mobile terminals including the mobile terminal 100) is extracted from the connection priority information, so that the wireless network control device list CS_LIST is prepared in which a priority according to the connection priority of the mobile terminal 100 having made the call request, i.e. a high priority is assigned to the wireless network control device in a relatively good congestion state based on the connection priority.

Accordingly, it becomes possible for the mobile terminal with a higher connection priority to connect to the wireless network control device in a better congestion state. Also, it becomes possible for the mobile terminals with different connection priorities to be dispersedly connected to different wireless network control devices, thereby enabling an access concentration to a specific wireless network device to be prevented.

[6] Also, in the above-mentioned [5], the connection priority information may comprise a plurality of priorities and a same priority for a plurality of mobile terminals.

Accordingly, even if a plurality of connection priorities can be set according to a classification of e.g. a contract type or the like and a plurality of mobile terminals whose connection priorities are the same i.e. the contract types are the same exist, it is possible to dispersedly connect the mobile terminals to the different wireless network control devices by groups of the mobile terminals whose connection priorities are the same.

[7] Also, in the above-mentioned [1], the network management information may further comprise service type priority information in which connection priorities per service type for all wireless network control devices are set; and the second step (or means) may comprise a step of (or means) extracting a service type requested by the mobile terminal and preparing the wireless network control device list which prescribes the connection priority per wireless network control device corresponding to the extracted service type based on the service type priority information.

Namely, in this case, the network management information is composed so as to include service type priority information in addition to the congestion state. It is to be noted that priority per service type for each wireless network control device can be set per service type such as a voice call and a packet call.

When a call request is received from an arbitrary mobile terminal 100, a requested service type is extracted and the wireless network control device list CS_LIST is prepared in which wireless network control devices corresponding to the service type requested are arranged in order of priority based on the service type priority information.

Accordingly, it becomes possible to dispersedly connect the mobile terminals to the different wireless network control devices according to the service type requested by the mobile terminals, thereby enabling an access concentration to a specific wireless network device to be prevented.

[8] Also, in the above-mentioned [1], the network management information may further comprise call connection ratio information in which call connection ratios for all wireless network control devices are set; and the second step (or means) may comprise a step of (or means) preparing the wireless network control device list in which a higher priority is assigned to the wireless network control devices in descending order of call connection ratio for wireless network control device, when a plurality of wireless network control devices in a same congestion state are extracted from the network management information.

Namely, in this case, the network management information is composed to include call connection ratio information in addition to the congestion state. When a call request is received from an arbitrary mobile terminal 100 and a plurality of wireless network control devices whose congestion state is the same are extracted from the network management information, the wireless network control device list CS_LIST is prepared in which a higher priority is assigned to the wireless network control devices in descending order of call connection ratio for wireless network control device in comparison with the call connection ratios of the wireless network control devices based on the call connection ratio information.

Accordingly, it becomes possible for the mobile terminal having made a call request to connect to the wireless network control device with a good congestion state and a good call connection ratio, and to perform communication under a good communication quality.

[9] Also, in the above-mentioned [1], the second step (or means) may comprise a step of (or means) preparing the wireless network control device list in which different priorities are assigned between the wireless network control devices in a same congestion state, on a round-robin basis, every time the call request is received, when the wireless network control devices in the same congestion state are extracted from the network management information.

Namely, when a call request is received from an arbitrary mobile terminal and when a plurality of wireless network control devices in the same congestion state are extracted from the network management information, the wireless network control device list CS_LIST is prepared in which every time a call request is received a different priority is assigned to the wireless network control device on the round-robin basis. Namely, when the wireless network control device to which the highest priority is set is selected upon reception of a call request from e.g. one mobile terminal 100, the wireless network control device list CS_LIST is prepared in which the priority is assigned by removing from a selection logic the wireless network control device with the highest priority set in the wireless network control device list CS_LIST prepared for another mobile terminal (other than mobile terminal 100) having made a call request immediately before the selection.

Accordingly, every time a call request is made from the mobile terminal, the mobile terminals are dispersedly connected to the different wireless network control devices, thereby enabling an access concentration to a specific wireless network device to be prevented.

[10] Also, in the above-mentioned [1], the second step (or means) may comprise a step of (or means) preparing the wireless network control device list in which different priorities are assigned between the wireless network control devices, based on a random number table prepared by using a linear congruential method, every time the call request is received, when a plurality of wireless network control devices in a same congestion state are extracted from the network management information.

Namely, when a call request is received from an arbitrary mobile terminal 100 and a plurality of wireless network control devices in the same congestion state are extracted from the network management information, the wireless network control device list CS_LIST is prepared in which different priorities are assigned to all of the wireless network control devices every time the call request is made based on a random number table prepared by using a linear congruential method.

Accordingly, every time a call request is made from the mobile terminal, the mobile terminals are dispersedly connected to the different wireless network control devices, thereby enabling an access concentration to a specific wireless network device to be prevented.

[11] Also, in order to achieve the above-mentioned object, a mobile communication system according to the present invention comprises: as shown in Fig.1, a mobile terminal 100; and a core network 400 having a database of network management information indicating congestion states of all wireless network control devices 301-304 within a mobile communication network; each of the wireless network control devices 301-304 comprises a first means acquiring the network management information from the core network 400; a second means preparing a wireless network control device list CS_LIST in which a higher priority is assigned to the wireless network control devices in ascending order of congestion degree based on the network management information when a call request (1) is received from one mobile terminal 100 through a base station 201; and a third means notifying (2) the wireless network control device list CS_LIST to the mobile terminal 100 through the base station 201, and the mobile terminal 100 selects one of the wireless network control devices (e.g. wireless network control device 302) with a highest priority from the wireless network control device list CS_LIST notified to be connected (3).

As described in the above-mentioned [1], by applying the present invention to all of the wireless network devices 301-304 within a mobile communication system, the connection switchover to the wireless network control device 302 in a good congestion state can be performed with the base station 201 to which the mobile terminal 100 is connected being maintained.

Also, since the core network 400 has a network management information database, each of the wireless network control devices 301-304 can acquire information centralized within the mobile communication system.

[12] Also, in the above-mentioned [10], the wireless network control device may further comprise a fourth means notifying the congestion state of each of the wireless network control devices itself to the core network.

Accordingly, each of the wireless network control devices 301-304 within the mobile communication system notifies the congestion state of the device itself to the core network 400, thereby enabling the core network 400 to hold the latest congestion state of all of the wireless network control devices 301-304.

[13] Also, in the above-mentioned [11], the core network may update the database of the network management information based on the congestion state notified.

Accordingly, the core network 400 reflects the latest congestion state notified from each of the wireless network control devices 301-304 within the mobile communication system in the network management information database, thereby enabling each of the wireless network control devices 301-304 to acquire the latest congestion states of all of the wireless network control devices 301-304 within the mobile communication system.

The present invention enables the mobile terminal to perform a connection switchover to the wireless network control device in a good congestion state with the base station connected being maintained. Therefore, when a congestion has occurred in an arbitrary wireless network control device within the mobile communication network, the connection is switched over from the wireless network control device in the bad congestion state to the wireless network control device in a good congestion state, thereby enabling a congestion state of the wireless network control device where the congestion has occurred to be restored. Also, a congestion occurrence can be prevented.

Furthermore, the wireless network control device list in which different priorities are assigned to the mobile terminals is prepared to be notified to the mobile terminal. Therefore, all of the wireless network control device resources within the mobile communication network can be equally used, thereby enabling a deviation of an operation state of a wireless network control device to be eliminated, and enabling a longevity as a system.

### Brief Description of the Drawings

The above and other objects and advantages of the invention will be apparent upon consideration of the following detailed description, taken in conjunction with the accompanying drawings, in which the reference numerals refer to like parts throughout and in which:
Fig.1 is a block diagram showing an operation principle of a wireless network control method and device, and a mobile communication system according to the present invention;
Fig.2 is a block diagram showing an embodiment of an arrangement in a wireless network control method and device, and a mobile communication system according to the present invention;
Fig.3 is a block diagram showing an example of an acquiring operation of network management information in a wireless network control method and device, and a mobile communication system according to the present invention;
Fig.4 is a flowchart showing processing of a mobile terminal in a wireless network control method and device, and a mobile communication system according to the present invention;
Fig.5 is a block sequence diagram showing an overall operation example in a wireless network control method and device, and a mobile communication system according to the present invention;
Figs.6A and 6B are diagrams showing an embodiment (1) of network management information and a wireless network control device list used in a wireless network control method and device, and a mobile communication system according to the present invention;
Fig.7 is a flowchart showing a preparation procedure example (1) of a wireless network control device list in a wireless network control method and device, and a mobile communication system according to the present invention;
Figs.8A and 8B are diagrams showing an embodiment (2) of network management information and a wireless network control device list used in a wireless network control method and device, and a mobile communication system according to the present invention;
Fig.9 is a flowchart showing a preparation procedure example (2) of a wireless network control device list in a wireless network control method and device, and a mobile communication system according to the present invention;
Figs.10A and 10B are diagrams showing an embodiment (3) of network management information and a wireless network control device list used in a wireless network control method and device, and a mobile communication system according to the present invention;
Fig.11 is flowchart showing a preparation procedure example (3) of a wireless network control device list in a wireless network control method and device, and a mobile communication system according to the present invention;
Figs.12A and 12B are diagrams showing an embodiment (4) of network management information and a wireless network control device list used in a wireless network control method and device, and a mobile communication system according to the present invention;
Fig.13 is flowchart showing a preparation procedure example (4) of a wireless network control device list in a wireless network control method and device, and a mobile communication system according to the present invention;
Figs.14A and 14B are diagrams showing an embodiment (5) of network management information and a wireless network control device list used in a wireless network control method and device, and a mobile communication system according to the present invention;
Fig.15 is flowchart showing a preparation procedure example (5) of a wireless network control device list in a wireless network control method and device, and a mobile communication system according to the present invention;
Figs.16A and 16B are diagrams showing an embodiment (6) of network management information and a wireless network control device list used in a wireless network control method and device, and a mobile communication system according to the present invention;
Fig.17 is flowchart showing a preparation procedure example (6) of a wireless network control device list in a wireless network control method and device, and a mobile communication system according to the present invention;
Fig.18 is a block diagram showing a prior art example [1] of a congestion avoidance technology of a mobile communication system; and
Fig.19 is a block diagram showing a prior art example [3] of a congestion avoidance technology of a mobile communication system.

### Description of the Embodiments

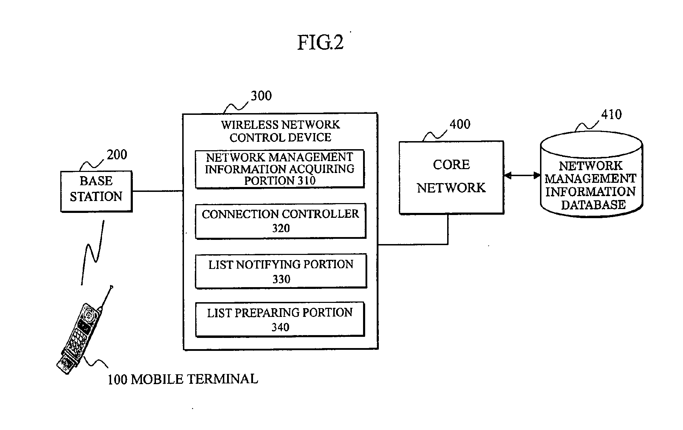

As described referring to Fig.1, the wireless network control method and device according to the present invention are realized in each of the wireless network control devices 301-304. Their embodiments including the wireless network control device list and the preparation procedure will now be described referring to Figs.2, 3, 4, 5, 6A, 6B, 7, 8A, 8B, 9, 10A, 10B, 11, 12A, 12B, 13, 14A, 14B, 15, 16A, 16B, and 17.

### [1] Arrangement embodiment: Fig.2

In this embodiment, as schematically shown in Fig.2, the mobile communication system is composed of the mobile terminal 100, a base station 200, a wireless network control device 300, and the core network 400 having a network management information database 410. The wireless network control device 300 is further provided with a network management information acquiring portion 310 acquiring network management information from the core network 400, a connection controller 320 receiving a call request from the mobile terminal 100 through the base station 200, a list preparing portion 340 preparing the wireless network control device list in which a higher priority is assigned to the wireless network control devices in ascending order of congestion degree (as the congestion state becomes better) based on the acquired network management information, and a list notifying portion 330 notifying the prepared wireless network control device list to the mobile terminal 100 through the base station 200.

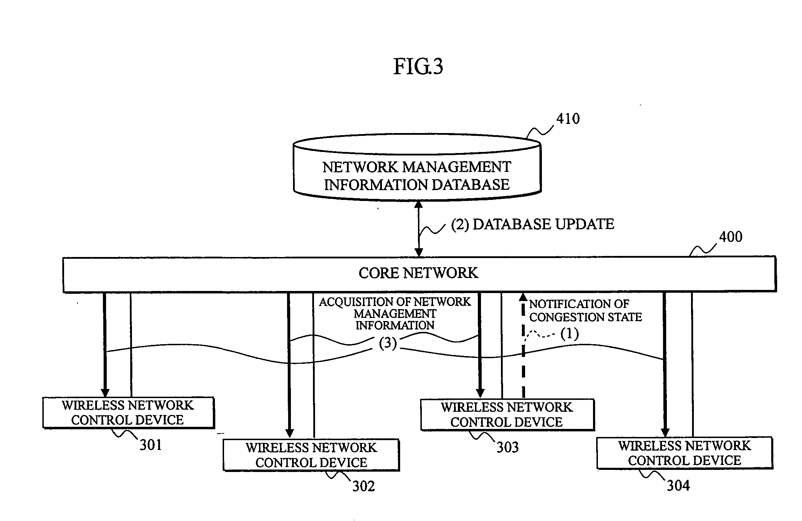

### [2] Operation embodiment: Figs. 3, 4, 5, 6A, 6B, 7, 8A, 8B, 9, 10A, 10B, 11, 12A, 12B, 13, 14A, 14B, 15, 16A, 16B, and 17

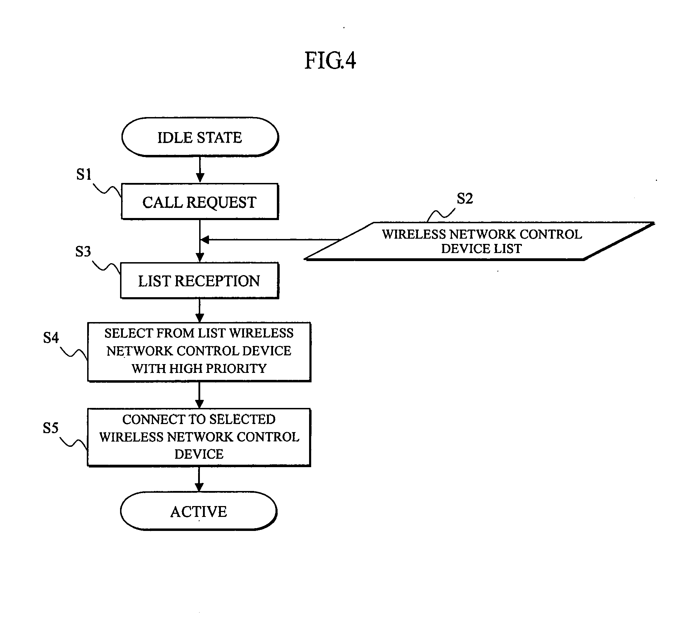

The operation of this embodiment will now be described. Firstly, an operation example when the wireless network control device 300 acquires the network management information from the core network 400 and a processing flow from a call request within the mobile terminal 100 to an active state will now be respectively described referring to Figs.3 and 4.

### · Acquiring operation example of network management information: Fig.3

Fig.3 specifically shows a connection relationship between the wireless network control devices 301-304, the core network 400, and the network management information database 410 within the mobile communication system shown in Fig.2.

For example, when a congestion has occurred in the wireless network control device 303, the wireless network control device 303 notifies (1) a congestion state to the core network 400.

The core network 400 updates (2) the network management information database 410 based on the notified congestion state.

Thus, when acquiring (3) the network management information from the core network 400, each of the wireless network control devices 301-304 can detect that the congestion state of the wireless network control device 303 has changed or a congestion has occurred.

### • Processing flow of mobile terminal: Fig.4

Fig.4 shows a processing flow from a call request by the mobile terminal 100 to the active state.

When the mobile terminal 100 is in the idle state, or does not make a call request, and is not connected to any of the base stations 200 and the wireless network control devices 300, the mobile terminal 100 makes a call request to the wireless network control device 300 through the base station 200 according to a call operation of a user in the mobile terminal 100 (at step S1).

After having made the call request, the mobile terminal 100 receives the wireless network control device list CS_LIST (see Fig.1) in which a higher priority is assigned to the wireless network control devices in ascending order of congestion degree (at steps S2 and S3).

It is to be noted that a preparation example of the wireless network control device list CS_LIST in the wireless network control device 300 and a notifying operation to the mobile terminal 100 will be described later.

The mobile terminal 100 selects the wireless network control device to which the highest priority is assigned from the received wireless network control device list CS_LIST (e.g. the wireless network control device 302 shown in Fig.1) (at step S4), and is connected to the selected wireless network control device (at step S5). Then the mobile terminal 100 transitions to the active state to perform communications.

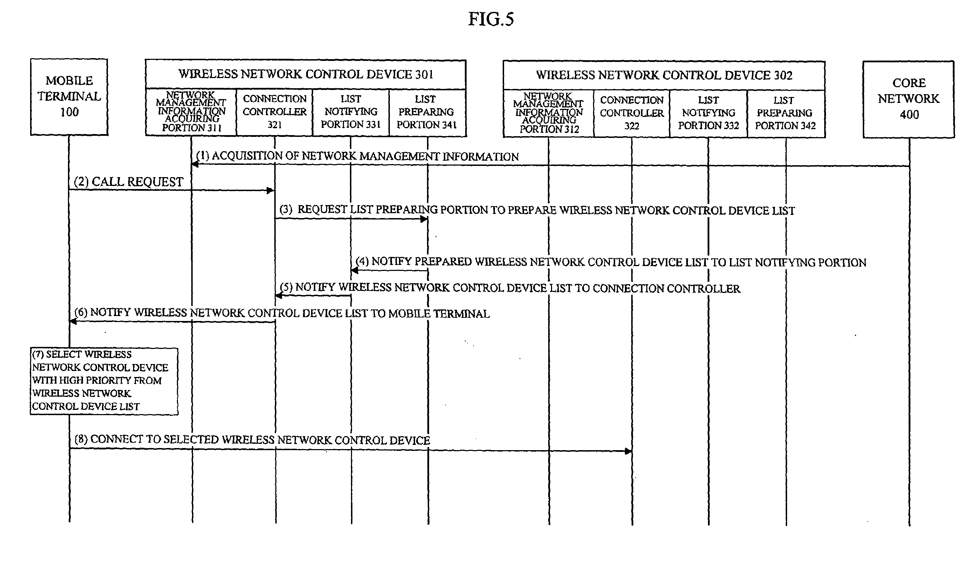

### • Overall operation example: Fig.5

The overall operation of this embodiment will be described referring to Fig.5. It is to be noted that Fig.5 specifically shows an operation among the mobile terminal 100, the wireless network control devices 301 and 302, and the core network 400 within the mobile communication system shown in Fig.2.

Firstly, the wireless network control device 301 always acquires (1) the latest network management information from the core network 400 as shown in Fig.3. When receiving the call request (2) from the mobile terminal 100, the connection controller 321 requests (3) the list preparing portion 341 to prepare the wireless network control device list.

Receiving the request, the list preparing portion 341 prepares the wireless network control device list in which the highest priority is assigned to e.g. the wireless network control device 302 based on the network management information already acquired from the core network 400, and notifies (4) the list to the notifying portion 331. The list notifying portion 331 notifies (5) the prepared wireless network control device list to the connection controller 321, which further notifies (6) to the mobile terminal 100.

The mobile terminal 100 having received the wireless network control device list, as shown in Fig.4, selects (7) the wireless network control device 302 with the highest priority based on the wireless network control device list notified, and is connected (8) to the wireless network control device 302.

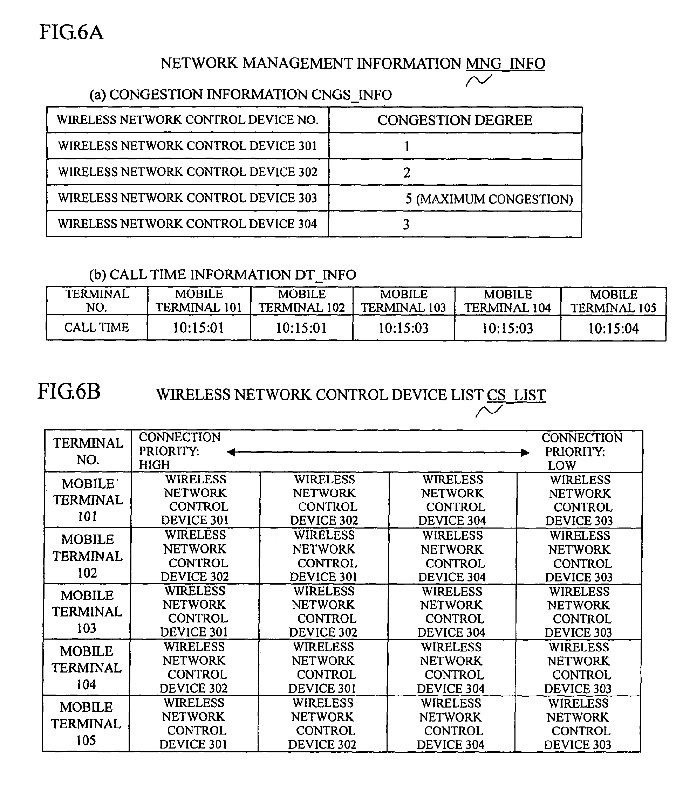

### ⊚Preparation example of wireless network control device list: Figs.6A, 6B, 7, 8A, 8B, 9, 10A, 10B, 11, 12A, 12B, 13, 14A, 14B, 15, 16A, 16B, and 17

Hereinafter, preparation examples (1)-(6) of the wireless network control device list will be respectively described referring to Figs.6A, 6B, 7, 8A, 8B, 9, 10A, 10B, 11, 12A, 12B, 13, 14A, 14B, 15, 16A, 16B, and 17. It is to be noted that since various preparation methods of the wireless network control device list can be conceived, the methods are not specifically limited to the following preparation examples.

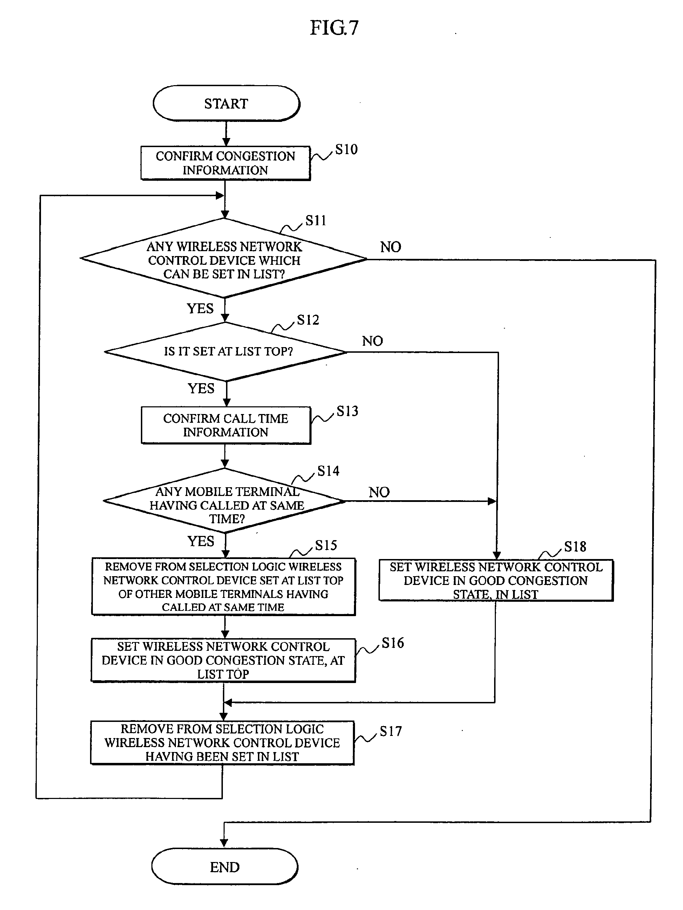

### (1) List preparation example by call time: Figs.6A, 6B, and 7

Figs.6A and 6B show an embodiment in which a network management information MNG_INFO (see Fig.6A) acquired by the wireless network control device includes not only congestion information CNGS_INFO (see Fig.6A (a)) indicating congestion states but also call time information DT_INFO (see Fig.6A (b)). The congestion information CNGS_INFO indicates the congestion states of the wireless network control devices 301-304. The call time information DT_INFO indicates a call time for each of the mobile terminals 101-105 within the mobile communication system.

Fig.7 shows a procedure example of dispersing the different wireless network control devices to the mobile terminals making call requests at the same time according to the call time by using the network management information MNG_INFO to prepare the wireless network control device list CS_LIST per mobile terminal, as shown in Fig.6B.

As for the congestion state in the congestion information CNGS_INFO, "1" indicates the best congestion state. As the number becomes larger, it indicates a worse congestion state, and "5" indicates the worst congestion state (hereinafter, the same applies to the description of the preparation examples (2)-(6) of the wireless network control device list). Namely, the congestion states of the wireless network control devices 301-304 are in the following order starting from the best congestion state; wireless network control device 301 (congestion state = "1") → wireless network control device 302 (congestion state = "2") → wireless network control device 304 (congestion state = "3") → wireless network control device 303 (congestion state = "5").

Also, the call time information DT_INFO indicates that the call times of the mobile terminals 101 and 102 are the same (call time = "10:15:01"), the call times of the mobile terminals 103 and 104 are the same (call time = "10:15:03"), and the mobile terminals 105 (call time = "10:15:04") has no mobile terminal which has made a call request at the same time.

The preparation procedure of the wireless network control device list CS_LIST will now be described referring to Fig.7.

When receiving a call request from e.g. the mobile terminal 101, the congestion information CNGS_INFO is confirmed (at step S10). Since the wireless network control devices 301-304 settable in the wireless network control device list CS_LIST exist within the congestion information CNGS_INFO (at step S11) and nothing is yet set in the wireless network control device list CS_LIST, namely the setting is at the top of the wireless network control device list CS_LIST for the mobile terminal 101, the process proceeds to step S13 (at step S12).

At step S13, the call time information DT_INFO is confirmed. As a result, since the mobile terminal 102 which has made the call request at the same time as the mobile terminal 101 exists (at step S14), the processing of removing from selection logic the wireless network control device set at the top of the wireless network control device list CS_LIST for another mobile terminal having made the call at the same time, i.e. the mobile terminal 102 is performed (at step S15). Since the wireless network control device list CS_LIST for the mobile terminal 102 has not been prepared, nothing is performed and the process proceeds to step S16.

It is to be noted that while in the above-mentioned example, as for the mobile terminals 101 and 102 having made the call requests at the same time, the mobile terminal 101 is firstly processed, this is due to an order or the like upon having executed e.g. a list preparation program, so that it is possible to firstly process the mobile terminal 102.

The wireless network control device in the best congestion state, namely the wireless network control device 301 is set at the top of the wireless network control device list CS_LIST for the mobile terminal 101 (at step S16), the wireless network control device 301 is removed from the selection logic for the following record (at step S17), and the process returns to step S11.

Since the wireless network control devices 302-304 which can be set in the wireless network control device list CS_LIST for the mobile terminal 101 still exist at step S11, and the setting at the top of the wireless network control device list has been completed, the process proceeds to step S18 from step S12. At step S18, the wireless network control device 302 in the second best congestion state next to the wireless network control device 301 is set in the wireless network control device list C8_LI8T as the second record. The same operation is repeated for the wireless network control devices 303 and 304. As shown in Fig.6B, the wireless network control device list CS_LIST for the mobile terminal 101 (wireless network control devices 301→302→ 304→303 starting from the highest connection priority) is prepared.

On the other hand, as to the wireless network control device list CS_LIST for the mobile terminal 102 having made the call request at the same time as the mobile terminal 101, the wireless network control device 301 set at the top of the wireless network control device list CS_LIST for the mobile terminal 101 having made the call request at the same time is removed from the selection logic at steps 15 and 16, and the wireless network control device 302 in the best congestion state is set at the top. In the same way as the case of the mobile terminal 101, as shown in Fig.6B, the wireless network control device list CS_LIST (wireless network control devices 302→301→304→303 starting from the highest connection priority) is prepared.

Also, in the same way as the above, the wireless network control device list CS_LIST for the mobile terminals 103 and 104 having made the call requests at the same time is prepared as shown in Fig.6B.

Also, for the mobile terminal 105 having no other mobile terminal which has made the call request at the same time, only setting process of step S18 is executed. As shown in Fig.6B, the wireless network control device list CS_LIST is prepared in ascending order of congestion degree (wireless network control devices 301→302 →304→303 starting from the highest connection priority).

Thus, the wireless network control device list CS_LIST for all of the mobile terminals 101-105 is prepared. The tops of the wireless network control device list CS_LIST, i.e. the wireless network control devices with the highest connection priority for the mobile terminals 101 and 102 (or mobile terminals 103 and 104) are respectively the wireless network control devices 301 and 302. Since different wireless network control devices are set, the mobile terminals 101 and 102 (or mobile terminals 103 and 104) having made the call requests at the same time are dispersedly connected to different wireless network control devices 301 and 302. As a result, an access concentration to a specific wireless network device, e.g. the wireless network control device 301 in the best congestion state can be prevented.

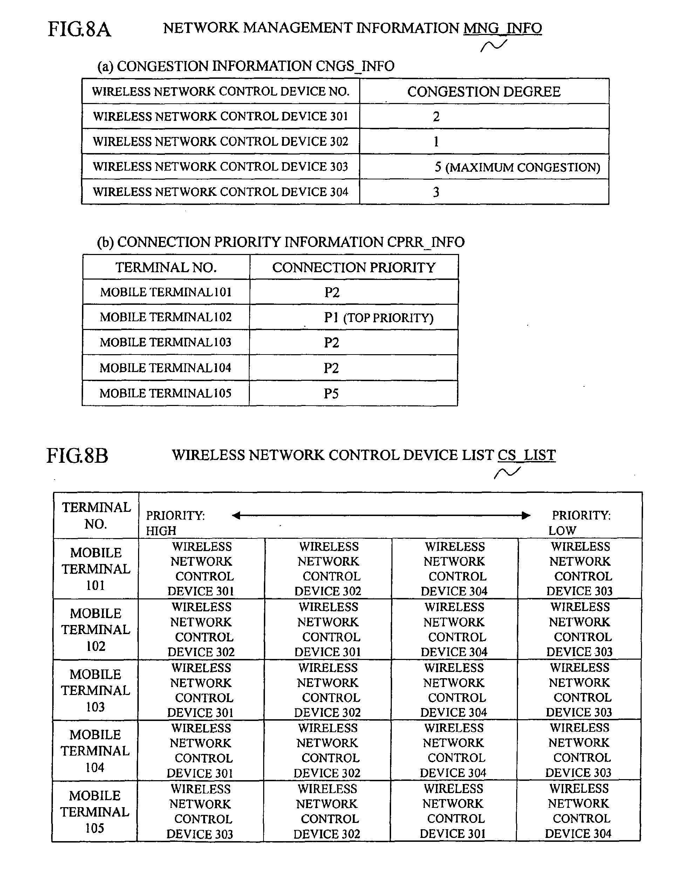

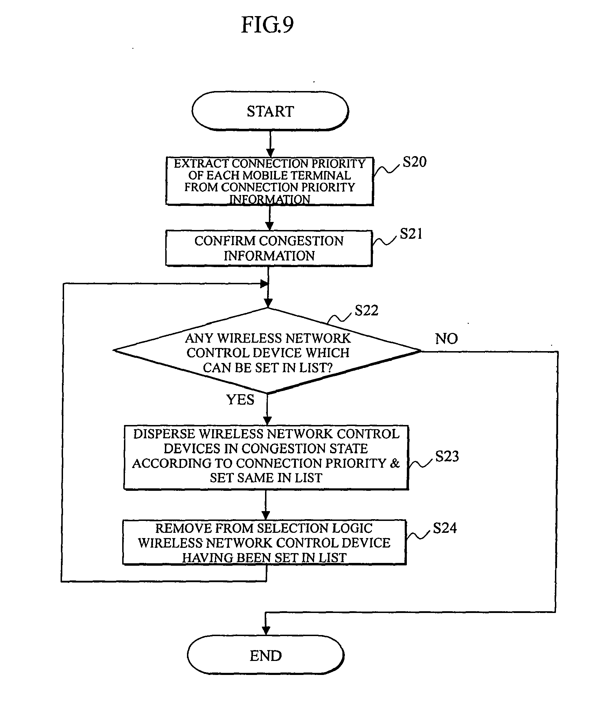

### (2) List preparation example by connection priority of mobile terminal: Figs. 8A, 8B, and 9

Figs.8A and 8B show an embodiment in which the network management information MNG_INFO (Fig.8A) acquired by the wireless network control device includes not only the congestion information CNGS_INFO (see Fig.8A (a)) indicating the congestion state but also a connection priority information CPRR_INFO (see Fig.8A (b)) for the mobile terminal within the mobile communication system. Namely, the congestion information CNGS_INFO indicates the congestion state of the wireless network control devices 301-304, and the connection priority information CPRR_INFO indicates the connection priority of the mobile terminals 101-105 within the mobile communication system.

Fig.9 shows an operation example of dispersing the wireless network control devices according to the connection priority for each of the mobile terminals 101-105 within the mobile communication system and preparing the wireless network control device list CS_LIST shown in Fig.8B.

The congestion state of the wireless network control devices 301-304 is as follows, starting from the best congestion state; wireless network control device 302 (congestion state = "1")→wireless network control device 301 (congestion state = "2")→wireless network control device 304 (congestion state = "3")→wireless network control device 303 (congestion state = "5"). Also, the connection priority of the mobile terminals 101-105 is as follows, starting from the highest priority, the mobile terminal 102 (connection priority = "P1")→mobile terminals 101, 103, and 104 (connection priority = "P2")→mobile terminal 105 (connection priority = "P5").

Hereinafter, the preparation procedure of the wireless network control device list CS_LIST will be described referring to Fig.9.

When receiving the call request from e.g. the mobile terminal 101, the connection priority for each of the mobile terminals 101-105 is extracted from the connection priority information CPRR_INFO (at step S20), and the congestion information CNGS_INFO is confirmed (at step S21).

As a result, since the wireless network control devices 301-304 which can be set in the wireless network control device list CS_LIST exist within the congestion information CNGS_INFO (at step S22), the wireless network control device 301 whose congestion state is the second best is set at the top of the wireless network control device list CS_LIST because of a relative congestion state according to the connection priority = "P2" of the mobile terminal 101, i.e. the second best connection priority next to the mobile terminal 102 (connection priority = "P1") in this case. For the following records, the wireless network control devices are set in ascending order of congestion degree. As shown in Fig.8B, the wireless network control device list CS_LIST for the mobile terminal 101 (the wireless network control device 301→302→304→303 starting from the highest priority) is prepared, so that the process proceeds to step S24 (at step S23).

Since all of the wireless network control devices 301-304 set in the wireless network control device list CS_LIST are removed from the selection logic at step S24, the process returns to step S22 and completes the preparation processing.

Also, in the same way as the above, the wireless network control device list CS_LIST for the mobile terminals 102-105 is prepared as shown in Fig.8B.

Thus, the wireless network control device list CS_LIST is prepared for all of the mobile terminals 101-105. At the top of the wireless network control device list CS_LIST for the mobile terminal 102 with the highest connection priority, the wireless network control device 302 in the best congestion state is set. At the top of the wireless network control device list CS_LIST for the mobile terminals 103 and 104 with the same connection priority as the mobile terminal 101, the wireless network control device 301 is also set, and at the top of the wireless network control device list CS_LIST for the mobile terminal 105 with the lowest connection priority, the wireless network control device 303 in the worst congestion state is set.

Thus, as the connection priority of the mobile terminal becomes higher, it can be connected to the wireless network control device in a better congestion state. Also, the mobile terminals with different connection priorities are dispersedly connected to different wireless network control devices, thereby enabling an access concentration to a specific wireless network device to be prevented.

In the example of Figs. 8A and 8B, three types of connection priorities P1, P2, and P5 are set in the connection priority information CPRR_INFO of Fig.8A (b) and three mobile terminals 101, 103, and 104 are set to the same connection priority = "P2". Thus, a group of the mobile terminals 101, 103, and 104 whose connection priority is the same "P2", a mobile terminal 102 whose connection priority is "P1", and the mobile terminal 105 whose connection priority is "P5" are respectively and dispersedly connected to the different wireless network control devices.

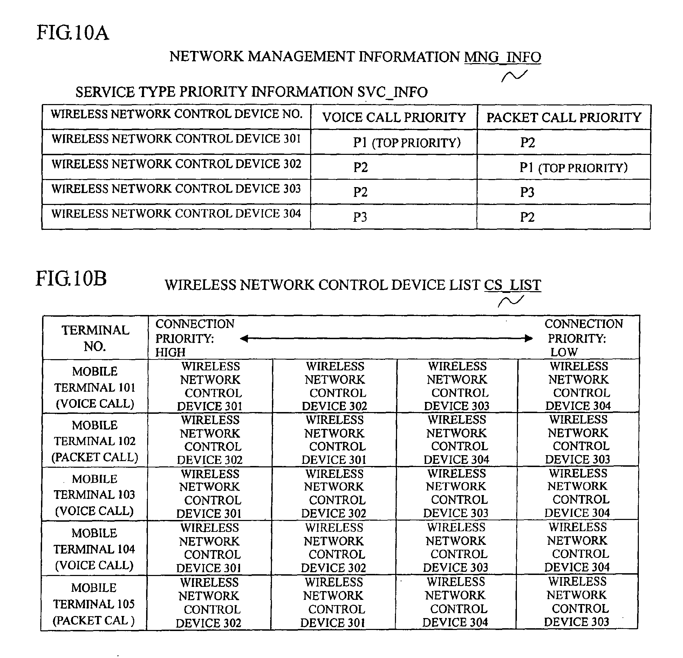

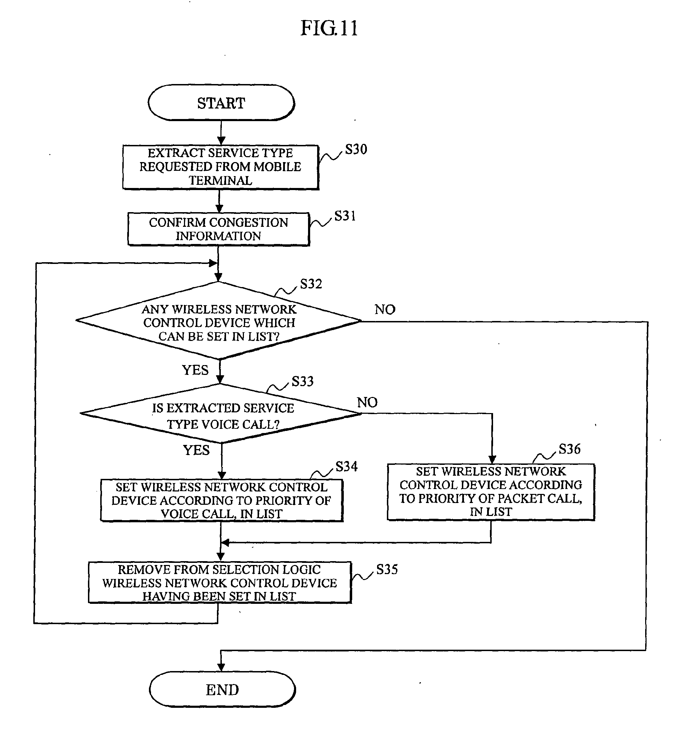

### (3) List preparation example by service type priority: Figs.10A, 10B, and 11

Figs.10A and 10B show an embodiment in which the network management information MNG_INFO (see Fig.10A) acquired by the wireless network control device includes service type priority information SVC_INFO, indicating a voice call priority when the service type is "voice call", and a packet call priority when the service type is "packet call" for the wireless network control devices 301-304.

Fig.11 shows a procedure example of dispersing the wireless network control devices according to the service type requested by the mobile terminals 101-105 by using the network management information MNG_INFO and preparing the wireless network control device list CS_LIST different per service type requested by the mobile terminal shown in Fig.10B.

The voice call priority and the packet call priority for each of the wireless network control devices 301-304 are respectively {P1, P2}, {P2, P1}, {P2, P3}, and {P3, P2} = (voice call priority, packet call priority). The highest priority for the "voice call" service is set in the wireless network control device 301, and the highest priority for the "packet call" is set in the wireless network control device 302.

Hereinafter, the preparation procedure of the wireless network control device list CS_LIST will be described referring to Fig.11.

When receiving a call request from e.g. the mobile terminal 101, the requested service type of "voice call" is extracted (at step S30), and the congestion information CNGS_INFO is confirmed (at step S31).

As a result, since the wireless network control devices 301-304 which can be set in the wireless network control device list CS_LIST exist within the service type priority information SVC_INFO at step S32 and the requested service type is "voice call" at step S33, as shown in Fig.10B, the wireless network control device list CS_LIST (the wireless network control device 301→302→303→304 starting from the highest connection priority) for the mobile terminal 101 in descending order of voice call priority is prepared, so that the process proceeds to step S35 (at step S34).

Since all of the wireless network control devices 301-304 set in the wireless network control device list CS_LIST are removed from the selection logic at step S35, the process returns to step S32, and the preparation processing is completed.

On the other hand, when receiving a call request from the mobile terminal 102 having requested the service of "packet call", as shown in Fig.10B, the wireless network control device list CS_LIST (the wireless network control device 302→301→304→303 starting from highest connection priority) for the mobile terminal 102 is prepared in descending order of packet call priority (at step S36).

Also, in the same way as the above, the wireless network control device list CS_LIST for each of the mobile terminals 103-105 is also prepared as shown in Fig.10B.

Thus, the wireless network control device list CS_LIST for all of the mobile terminals 101-105 is prepared. The top of the wireless network control device list CS_LIST for each of the mobile terminals 101, 103, and 104 requesting the service of "voice call", namely the wireless network control device with the highest connection priority is the wireless network control device 301. The tops of the wireless network control device list CS_LIST for the mobile terminals 102 and 105 requesting the service of "packet call" are the wireless network control device 302. Therefore, the mobile terminals are dispersedly connected to the different wireless network control devices according to the service type requested by each mobile terminal, thereby enabling the access concentration to a specific wireless network device to be prevented.

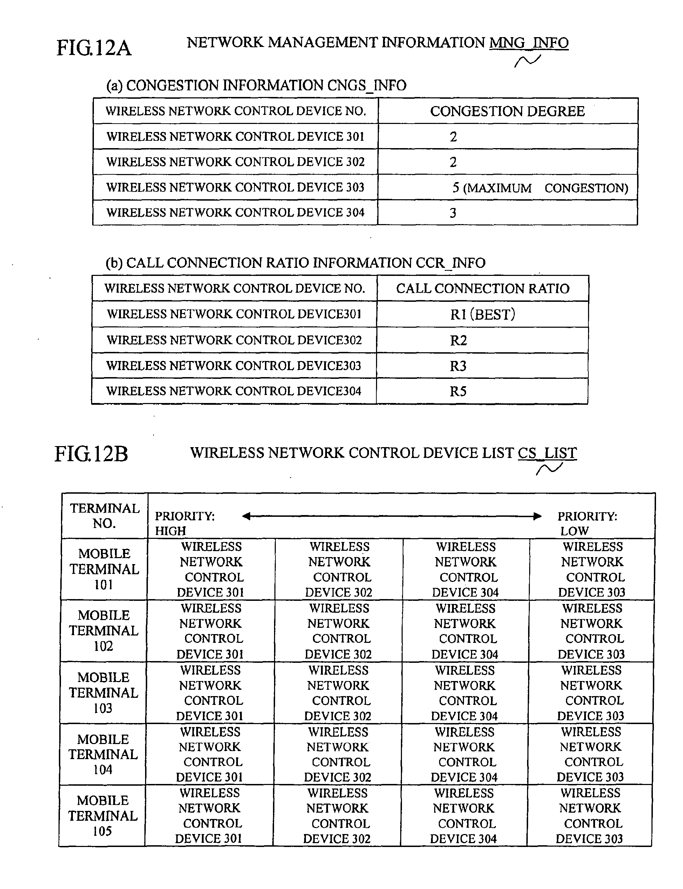

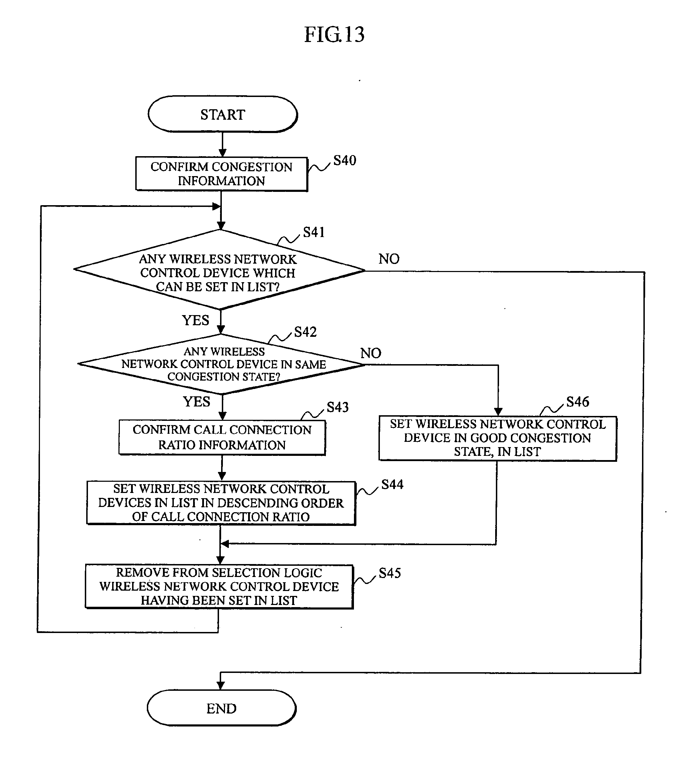

### (4) List preparation example by call connection ratio: Figs. 12A, 12B, and 13

Figs.12A and 12B show an embodiment in which the network management information MNG_INFO (see Fig.12A) acquired by the wireless network control device includes not only the congestion information CNGS_INFO (see Fig.12A (a)) indicating the congestion state but also call connection ratio information CCR_INFO (see Fig.12A (b)). The congestion information CNGS_INFO and the call connection ratio information CCR_INFO respectively show a congestion state and a call connection ratio for each of the wireless network control devices 301-304.

Fig.13 shows a procedure example of dispersing the wireless network control devices in the same congestion state according to the call connection ratio by using the network management information MNG_INFO and preparing the wireless network control device list CS_LIST shown in Fig.12B.

The wireless network control devices 301 and 302 are in the same congestion state (congestion state = "2"), the congestion state of the wireless network control device 303 is "5", and the congestion state of the wireless network control device 304 is "3". Also, the call connection ratio for each of the wireless network control devices 301-304 is as follows, starting from the best connection ratio; wireless network control device 301 (call connection ratio = "R1")→wireless network control device 302 (call connection ratio = "R2")→wireless network control device 303 (call connection ratio = "R3")→wireless network control device 304 (call connection ratio = "R5").

It is to be noted that each congestion state in the congestion information CNGS_INFO is similarly set in the list preparation examples (5) and (6), which will be described later.

The preparation procedure of the wireless network control device list CS_LIST will now be described referring to Fig. 13.

When a call request is received from e.g. the mobile terminal 101, the congestion information CNGS_INFO is confirmed (at step S40). Since the wireless network control devices 301-304 which can be set in the wireless network control device list CS_LIST exist in the congestion information CNGS_INFO (at step S41) and the wireless network control devices 301 and 302 are in the same congestion state, the process proceeds to step S43 (at step S42).

At step S43, the call connection ratio information CCR_INFO is confirmed. As a result, the wireless network control device 301 in a good call connection ratio is set at the top of the wireless network control device list CS_LIST for the mobile terminal 101, and the wireless network control device 302 is set in the second record (at step S44). The wireless network control devices 301 and 302 are removed from the selection logic for the following records, so that the process returns to step S41 (at step S45).

Since the wireless network control devices 303 and 304 which can be set in the wireless network control device list CS_LIST for the mobile terminal 101 still exist at step S41 and the respective congestion states are different at step S42, the wireless network control device 304 in a good congestion state is set in the third record of the wireless network control device list CS_LIST (at step S46). The same is repeatedly executed for the wireless network control device 303. As shown in Fig.12B, the wireless network control device list CS_LIST (wireless network control device 301 → 302 → 304 → 303 starting from highest priority) for the mobile terminal 101 is prepared.

Also, in the same way as the above description, the wireless network control device list CS_LIST for each of the mobile terminals 102-105 is prepared as shown in Fig.12B.

Thus, the wireless network control device list CS_LIST for all of the mobile terminals 101-105 is prepared. It is indicated that the top of the wireless network control device list CS_LIST for each of the mobile terminals 101-105, i.e. the wireless network control device with the highest priority is the wireless network control device 301 whose congestion state and call connection ratio are the best. Similarly, starting from the wireless network control device in a better congestion state and a better call connection ratio (in the form of giving preference to congestion state over call connection ratio) the wireless network control device 302→304→303 is set. Therefore, the mobile terminals 101-105 can be connected to the wireless network control device in a better congestion state and call connection ratio, so that communication can be performed under an excellent communication quality condition.

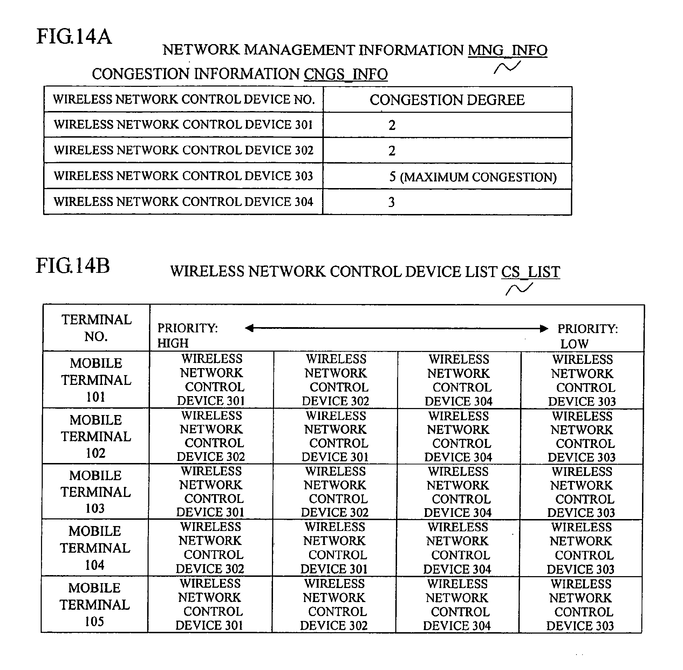

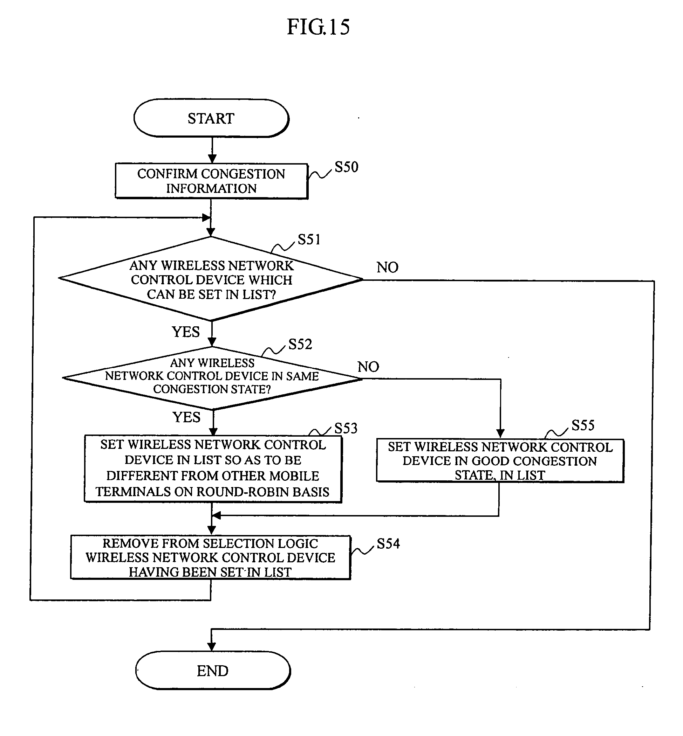

### (5) List preparation example on round-robin basis: Figs. 14A, 14B, and 15

Figs.14A and 14B show an embodiment in which the network management information MNG_INFO (see Fig.14A) acquired by the wireless network control device includes the congestion information CNGS_INFO indicating the congestion state. It is to be noted that each congestion state in the congestion information CNGS_INFO is the same setting as that shown in the above-mentioned list preparation example (4).

Fig.15 shows a procedure example of dispersing the wireless network control devices in the same congestion state on the round-robin basis by using the network management information MNG_INFO and preparing the wireless network control device list CS_LIST shown in Fig.14B.

The preparation procedure of the wireless network control device list CS_LIST will now be described referring to Fig.15.

When a call request is received from e.g. the mobile terminal 101, the congestion information CNGS_INFO is confirmed (at step S50). Since the wireless network control devices 301-304 which can be set in the wireless network control device list CS_LIST exist in the congestion information CNGS_INFO (at step S51) and the wireless network control devices 301 and 302 are in the same congestion state, the process proceeds to step S53 (at step S52).

At step S53, processing of setting the wireless network control device different from the wireless network control device already set at the top of the wireless network control device list CS_LIST for another mobile terminal is performed on the round-robin basis. However, since the wireless network control device list CS_LIST for other mobile terminals 102-105 has not been prepared, in order of the wireless network control device No. of the congestion information CNGS_INFO, for example, the wireless network control device 301 is set at the top of the wireless network control device list CS_LIST, and the wireless network control device 302 is set in the second record respectively, so that the process proceeds to step S54. At step S54, the wireless network control devices 301 and 302 are removed from the selection logic for the following records, and the process returns to step S51.

Since the wireless network control devices 303 and 304 which can be set in the wireless network control device list CS_LIST for the mobile terminal 101 still exist at step S51 and the respective congestion states are different at step S52, the wireless network control device 304 in a good congestion state is set in the third record of the wireless network control device list CS_LIST (at step S55). The same is repeatedly executed for the wireless network control device 303. As shown in Fig.14B, the wireless network control device list CS_LIST (wireless network control device 301 → 302 → 304 → 303 starting from highest priority) for the mobile terminal 101 is prepared.

At step S53, when a call request is received from the mobile terminal 102, the wireless network control device 302 is set, on the round-robin basis, at the top of the wireless network control device list CS_LIST for the mobile terminal 102 so that the wireless network control device may be different from the wireless network control device 301 set at the top of the wireless network control device list CS_LIST for the mobile terminal 101, and the wireless network control device 301 is set in the second record respectively. Hereafter, the wireless network control device list CS_LIST (wireless network control device 302→301→304→303 starting from highest priority) shown in Fig.14B is prepared in the same way as the mobile terminal 101.

Also, in the same way as the above description, the wireless network control device list CS_LIST for each of the mobile terminals 103-105 is prepared as shown in Fig.14B. However, it is supposed that in this example a call request is made in order of the mobile terminal 103→104→105.

Thus, calls can be dispersedly connected between the network control devices in the same congestion state every time a call request is made from the mobile terminal, and an access concentration to a specific wireless network device can be prevented.

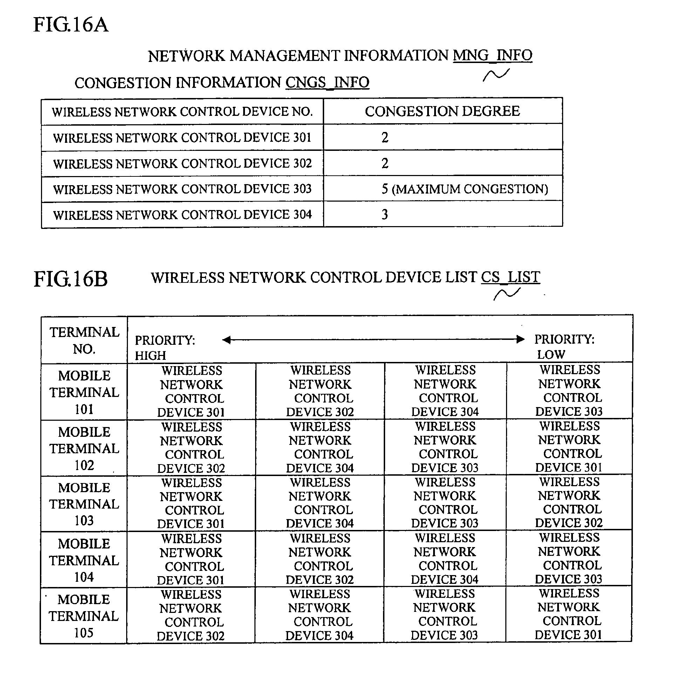

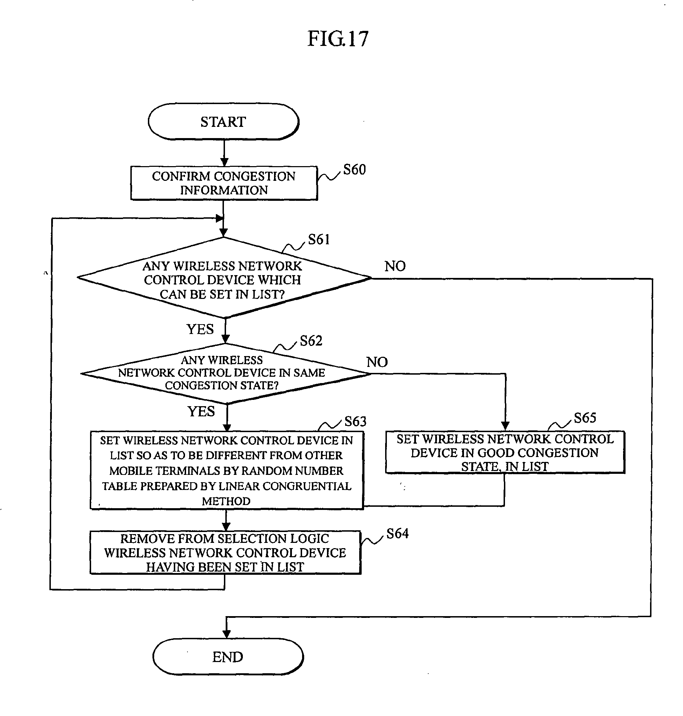

### (6) List preparation example by linear congruential method: Figs. 16A, 16B, and 17

Figs.16A and 16B show an embodiment in which the network management information MNG_INFO (Fig.16A) acquired by the wireless network control device includes the congestion information CNGS_INFO indicating the congestion state. It is to be noted that each congestion state in the congestion information CNGS_INFO is the same setting as the setting shown in the above list preparation examples (4) and (5).

Fig.17 shows a procedure example of dispersing the wireless network control devices in the same congestion state by using the network management information MNG_INFO based on a random number table prepared by a linear congruential method and preparing the wireless network control device list CS_LIST shown in Fig.16B.

The preparation procedure of the wireless network control device list CS_LIST will now be described referring to Fig.17.

When a call request is firstly received from e.g. the mobile terminal 101, the congestion information CNGS_INFO is confirmed (at step S60). Since the wireless network control devices 301-304 which can be set in the wireless network control device list exist in the congestion information CNGS_INFO (at step S61) and the wireless network control devices 301 and 302 are in the same congestion state, the process proceeds to step S63 (at step S62).

At step S63, based on the random number table prepared by the linear congruential method, the wireless network control devices 301-304 are arranged. In order of the arrangement, the wireless network control device list CS_LIST as shown in e.g. Fig.16B (wireless network control device 301→302→304→303 starting from highest priority) is prepared, and then the process proceeds to step S64.

At step S64, all of the wireless network control devices 301-304 set in the wireless network control device list CS_LIST are removed from the selection logic. Therefore, the process returns to step S61, and the preparation processing is completed.

In the same way as the case of the mobile terminal 101, the wireless network control device list CS_LIST for each of the mobile terminals 102-105 is prepared as shown in Fig.16B. It is to be noted that in this example, the wireless network control device list CS_LIST is prepared based on the random number table prepared by the linear congruential method every time each of the mobile terminals 101-105 makes the call request. Namely, since the list is prepared by assigning priorities to all of the wireless network control devices 301-304 at random per call request (per mobile terminal) regardless of the order of calling, the wireless network control device list CS_LIST for each of the mobile terminals 101-105 has a different setting respectively.

Thus, the mobile terminals are dispersedly connected to the different wireless network control devices every time the call request from the mobile terminal is made, thereby enabling an access concentration to a specific wireless network control device to be prevented.

It is to be noted that the present invention is not limited by the above-mentioned embodiments, and it is obvious that various modifications may be made by one skilled in the art based on the recitation of the claims.

## Claims

1. A wireless network control method comprising:
a first step of acquiring, from a core network within a mobile communication network, network management information indicating congestion states of all wireless network control devices;
a second step of preparing a wireless network control device list in which a higher priority is assigned to the wireless network control devices in ascending order of congestion degree based on the network management information when a call request is received from one mobile terminal through a base station; and
a third step of notifying the wireless network control device list to the mobile terminal through the base station to enable the mobile terminal to select one of the wireless network control devices as a connecting destination.

2. The wireless network control method as claimed in claim 1, further comprising a fourth step of notifying the congestion state of each of the wireless network control devices itself to the core network.

3. The wireless network control method as claimed in claim 1, wherein the congestion state comprises three or more states.

4. The wireless network control method as claimed in claim 1, wherein the network management information further comprises call time information in which call times of all mobile terminals having made call requests are set; and the second step comprises a step of preparing the wireless network control device list in which a different connection priority is assigned to each mobile terminal having made a call at a same time to render a different wireless network control device a connecting destination, when a plurality of mobile terminals having made calls at the same time are extracted from the call time information.

5. The wireless network control method as claimed in claim 1, wherein the network management information further comprises connection priority information in which connection priorities for all mobile terminals within a network are set; and the second step comprises a step of extracting the connection priority of each mobile terminal from the connection priority information, and preparing the wireless network control device list in which a higher priority is assigned to the wireless network control devices in ascending order of congestion degree sequentially from the mobile terminal with a higher connection priority to render a different wireless network control device a connecting destination.

6. The wireless network control method as claimed in claim 5, wherein the connection priority information comprises a plurality of priorities and a same priority for a plurality of mobile terminals.

7. The wireless network control method as claimed in claim 1, wherein the network management information further comprises service type priority information in which connection priorities per service type for all wireless network control devices are set; and the second step comprises a step of extracting a service type requested by the mobile terminal and preparing the wireless network control device list which prescribes the connection priority per wireless network control device corresponding to the extracted service type based on the service type priority information.

8. The wireless network control method as claimed in claim 1, wherein the network management information further comprises call connection ratio information in which call connection ratios for all wireless network control devices are set; and the second step comprises a step of preparing the wireless network control device list in which a higher priority is assigned to the wireless network control devices in descending order of call connection ratio, when a plurality of wireless network control devices in a same congestion state are extracted from the network management information.

9. The wireless network control method as claimed in claim 1, wherein the second step comprises a step of preparing the wireless network control device list in which different priorities are assigned between the wireless network control devices in a same congestion state, on a round-robin basis, every time the call request is received, when the wireless network control devices in the same congestion state are extracted from the network management information.

10. The wireless network control method as claimed in claim 1, wherein the second step comprises a step of preparing the wireless network control device list in which different priorities are assigned between the wireless network control devices, based on a random number table prepared by using a linear congruential method, every time the call request is received, when a plurality of wireless network control devices in a same congestion state are extracted from the network management information.

11. A wireless network control device comprising:
a first means acquiring, from a core network within a mobile communication network, network management information indicating congestion states of all wireless network control devices;
a second means preparing a wireless network control device list in which a higher priority is assigned to the wireless network control devices in ascending order of congestion degree based on the network management information when a call request is received from one mobile terminal through a base station; and
a third means notifying the wireless network control device list to the mobile terminal through the base station to enable the mobile terminal to select one of the wireless network control devices as a connecting destination.

12. The wireless network control device as claimed in claim 11, further comprising a fourth means notifying the congestion state of each of the wireless network control devices itself to the core network.

13. The wireless network control device as claimed in claim 11, wherein the congestion state comprises three or more states.

14. The wireless network control device as claimed in claim 11, wherein the network management information further comprises call time information in which call times of all mobile terminals having made call requests are set; and the second means comprises a means preparing the wireless network control device list in which a different connection priority is assigned to each mobile terminal having made a call at a same time to render a different wireless network control device a connecting destination, when a plurality of mobile terminals having made calls at the same time are extracted from the call time information.

15. The wireless network control device as claimed in claim 11, wherein the network management information further comprises connection priority information in which connection priorities for all mobile terminals within a network are set; and the second means comprises a means extracting the connection priority of each mobile terminal from the connection priority information, and preparing the wireless network control device list in which a higher priority is assigned to the wireless network control devices in ascending order of congestion degree sequentially from the mobile terminal with a higher connection priority to render a different wireless network control device a connecting destination.

16. The wireless network control device as claimed in claim 15, wherein the connection priority information comprises a plurality of priorities and a same priority for a plurality of mobile terminals.

17. The wireless network control device as claimed in claim 11, wherein the network management information further comprises service type priority information in which connection priorities per service type for all wireless network control devices are set; and the second means comprises a means extracting a service type requested by the mobile terminal and preparing the wireless network control device list which prescribes the connection priority per wireless network control device corresponding to the extracted service type based on the service type priority information.

18. The wireless network control device as claimed in claim 11, wherein the network management information further comprises call connection ratio information in which call connection ratios for all wireless network control devices are set; and the second means comprises a means preparing the wireless network control device list in which a higher priority is assigned to the wireless network control devices in descending order of call connection ratio, when a plurality of wireless network control devices in a same congestion state are extracted from the network management information.

19. The wireless network control device as claimed in claim 11, wherein the second means comprises a means preparing the wireless network control device list in which different priorities are assigned between the wireless network control devices in a same congestion state, on a round-robin basis, every time the call request is received, when the wireless network control devices in the same congestion state are extracted from the network management information.

20. The wireless network control device as claimed in claim 11, wherein the second means comprises a means preparing the wireless network control device list in which different priorities are assigned between the wireless network control devices, based on a random number table prepared by using a linear congruential method, every time the call request is received, when a plurality of wireless network control devices in a same congestion state are extracted from the network management information.

21. A mobile communication system comprising:
a mobile terminal;
wireless network control devices; and
a core network having a database of network management information indicating congestion states of all wireless network control devices within a mobile communication network;
each of the wireless network control devices comprising a first means acquiring the network management information from the core network; a second means preparing a wireless network control device list in which a higher priority is assigned to the wireless network control devices in ascending order of congestion degree based on the network management information when a call request is received from one mobile terminal through a base station; and a third means notifying the wireless network control device list to the mobile terminal through the base station, and
the mobile terminal selecting one of the wireless network control devices with a highest priority from the wireless network control device list notified to be connected.

22. The mobile communication system as claimed in claim 21, wherein the wireless network control device further comprises a fourth means notifying the congestion state of each of the wireless network control devices itself to the core network.

23. The mobile communication system as claimed in claim 22, wherein the core network updates the database of the network management information based on the congestion state notified.
